# FASCICULE DE BREVET EUROPEEN

(11) **EP 2 762 405 B1**
(45) Date de publication et mention de la délivrance du brevet: **21.09.2016**
(21) Numéro de dépôt: 14152628.5
(22) Date de dépôt: 27.01.2014
(51) Int. Cl.: B64C 25/48, B64C 25/50, B60T 8/17

(54) **Procédé et dispositif de pilotage latéral d'un aéronef roulant au sol**
Verfahren und Vorrichtung zur seitlichen Lenkung eines Flugzeugs am Boden
Procedure and apparatus for lateral steering of an aircraft on ground

(30) Priorité: 30.01.2013 FR 1350771
(43) Date de publication de la demande: 06.08.2014
(73) Titulaire: Airbus Opérations SAS, 31060 Toulouse (FR)
(72) Inventeur: Mayolle, Matthieu, 31170 TOURNEFEUILLE (FR); Acanfora, Caroline, 31700 BLAGNAC (FR); Romana, Louis-Emmanuel, 31770 COLOMIERS (FR); Fontan, Julien, 31000 TOULOUSE (FR)
(74) Mandataire: Gevers & Orès

(56) Documents cités:
- FR-A1- 2 887 222
- FR-A1- 2 929 019
- US-A1- 2006 186 267

## Description

La présente invention concerne un procédé et un dispositif de pilotage latéral d'un aéronef roulant au sol, en particulier sur un aéroport.

La présente invention s'applique au roulage d'un aéronef au sol, en particulier d'un avion, civil ou militaire, de transport de passagers ou de marchandises (fret), ou encore d'un drone. Elle concerne plus particulièrement la génération d'un moment de lacet (selon l'axe vertical de l'aéronef) permettant le contrôle latéral de l'aéronef roulant au sol.

Dans le cadre de la présente invention, on entend par roulage au sol, tout type de roulage possible d'un aéronef, tel que le roulage sur une piste d'atterrissage au cours de phases d'atterrissage et de décollage, ou le roulage sur des voies de circulation ou sur des aires de manoeuvres, notamment.

On connaît :
- par le document FR 2 887 222, un procédé et un dispositif pour la conduite d'un aéronef roulant au sol, prévoyant d'appliquer dans certaines conditions un ordre de commande additionnel à la gouverne de direction ; et
- par le document US 2006/186267, un système et un procédé pour freiner l'aéronef, en mettant en oeuvre un freinage différentiel.

Actuellement, le pilote contrôle les mouvements latéraux de l'aéronef au sol à l'aide d'organes de pilotage manuels (par exemple un volant permettant l'orientation de la roulette du train d'atterrissage avant, une manette de contrôle de la poussée des moteurs, des pédales de freins, un palonnier de direction), le long d'une trajectoire au sol. Ces organes de pilotage permettent de commander des actionneurs de l'aéronef capables d'influencer les mouvements latéraux de l'aéronef, essentiellement par l'intermédiaire de l'orientation de la roulette avant (et éventuellement de l'orientation des trains arrière) et de la gouverne de direction de la dérive, et plus rarement par une utilisation dissymétrique des moteurs et des freins.

Dans le cadre de la présente invention, on entend par roulette avant un ensemble mécanique qui est muni d'au moins une roue, qui est situé à l'avant de l'aéronef, qui fait de préférence partie d'un train d'atterrissage avant de l'aéronef, et qui est orientable (à l'aide d'un système d'orientation) de manière à pouvoir déplacer latéralement l'aéronef lorsque ce dernier roule au sol.

En cas de panne du système d'orientation de la roulette avant, à faible vitesse, l'aéronef ne peut plus être contrôlé latéralement, à l'aide des organes de pilotage usuels de contrôle de la trajectoire. Dans ce cas, généralement, le système d'orientation se désactive et la roulette avant est libre de rotation (mode « free to castor » en anglais).

Pour remédier à ce problème de contrôle, on connaît par le document FR - 2 929 019, un dispositif permettant de contrôler l'aéronef au sol selon l'axe latéral dans une telle situation en appliquant automatiquement un freinage différentiel (ou dissymétrique) afin de générer un moment de lacet, en réponse à une commande pilote sur les organes usuels de contrôle de la direction. Ce document FR - 2 929 019 prévoit, à cet effet, une fonction de secours BSF (pour « Back-Up Steering Function » en anglais) pour le contrôle directionnel, qui est tel que le comportement de l'aéronef soit le plus proche possible de celui obtenu en condition normale, lorsque le système d'orientation de la roulette est disponible.

L'application d'un tel freinage différentiel qui permet donc de générer un moment de lacet en cas de panne du système d'orientation de la roulette, entraîne toutefois une perte de vitesse de l'aéronef.

Cette perte de vitesse étant plus élevée que celle habituellement obtenue lorsque le système de direction normal est disponible, elle peut rendre le pilotage plus délicat. Le pilote doit, en effet, adapter sa poussée au freinage appliqué par la fonction BSF à l'initiation, mais également pendant le virage ou à la sortie du virage. Par ailleurs, une fois le virage établi, de légères corrections du pilote sur les organes de pilotages peuvent entraîner un freinage et donc une décélération variable.

Si la poussée appliquée par le pilote dans le virage n'est pas adaptée pour contrer la variation de vitesse générée par la fonction BSF, l'aéronef risque de s'arrêter ou le virage de s'effectuer à trop grande vitesse. En cas d'arrêt, la roulette avant peut atteindre un angle de braquage important, voire dans de rares cas toucher sa butée mécanique, ce qui peut entraîner des actions de maintenance, liées notamment au risque d'endommagement du système d'orientation de la roulette. De plus, si l'aéronef s'arrête avec un fort angle de braquage de la roulette ou encore en bord de piste, un redémarrage peut être assez difficile.

Au contraire, si la gestion de la poussée entraîne une survitesse, la performance produite par le freinage peut se trouver limitée par rapport au besoin.

En outre, une fois le virage effectué, il faut que le pilote réduise sa poussée, pour qu'arrivé en ligne droite, quand la fonction BSF n'appliquera plus de freinage, l'aéronef garde une vitesse opérationnelle.

La difficulté associée au contrôle de la vitesse pendant l'utilisation de la fonction BSF réside également dans le fait que le temps de réponse des moteurs à proximité du régime de ralenti est long, comparé à l'effet du freinage qui est beaucoup plus dynamique. La tâche de pilotage en vue d'un maintien de la vitesse peut alors devenir délicate du fait de cette différence de dynamique entre le freinage et la poussée des moteurs.

La fonction BSF qui permet donc de réaliser le contrôle latéral de l'aéronef en cas de panne du système d'orientation de la roulette avant, est ainsi susceptible de générer des variations de vitesse.

La présente invention a pour objet de remédier à cet inconvénient. Elle concerne un procédé de pilotage latéral d'un aéronef, en particulier d'un avion de transport, civil ou militaire, roulant au sol, ledit aéronef étant muni d'une roulette avant orientable et d'une fonction de freinage automatique dissymétrique (ou différentiel) de secours, procédé qui permet de minimiser le couplage latéral/longitudinal (à savoir minimiser les variations de vitesse de l'aéronef) lorsqu'un freinage dissymétrique est mis en oeuvre pour contrôler le moment de lacet de l'aéronef en cas de panne du système d'orientation de la roulette avant.

A cet effet, selon l'invention, ledit procédé du type mettant en oeuvre, en cas de panne du système d'orientation de la roulette avant, un freinage dissymétrique automatique de secours, comprenant au moins des étapes consistant :
a) à recevoir des ordres de commande relatifs à la commande de l'orientation de ladite roulette avant ;
b) à partir desdits ordres de commande, à déterminer automatiquement des ordres de freinage pour un ensemble de freins de l'aéronef, qui comprend des moyens de freinage d'au moins un train d'atterrissage principal gauche et des moyens de freinage d'au moins un train d'atterrissage principal droit et qui est susceptible d'engendrer un mouvement latéral de l'aéronef autour d'un axe vertical par l'intermédiaire d'une action dissymétrique, lesdits ordres de freinage étant déterminés de manière à engendrer sur l'aéronef, lorsqu'ils sont appliqués à l'ensemble de freins, un mouvement latéral qui est sensiblement identique au mouvement latéral qu'aurait engendré l'application desdits ordres de commande à ladite roulette avant ; et
c) à appliquer automatiquement audit ensemble de freins lesdits ordres de freinage,
est remarquable en ce qu'il comprend, de plus, des sous-étapes de l'étape b) consistant :
b1) à vérifier automatiquement, en cas d'activation du freinage dissymétrique automatique de secours, si des conditions de mise en virage de l'aéronef sont remplies ; et
b2) si ces conditions de mise en virage de l'aéronef sont remplies et au moins tant qu'elles le sont, à appliquer automatiquement une valeur de freinage, dite valeur de freinage symétrique, au niveau dudit ensemble de freins, puis au cours du virage à répartir automatiquement cette valeur de freinage symétrique en freinage différentiel entre les moyens de freinage du train d'atterrissage principal gauche et les moyens de freinage du train d'atterrissage principal droit, en fonction d'ordres de commande directionnels courants, de manière à maintenir un niveau de freinage global constant, au moins pour des ordres de commande directionnels inférieurs à un seuil prédéterminé. Avantageusement, lorsque les conditions de mise en virage sont remplies, la valeur de freinage symétrique est appliquée progressivement.

Ainsi, par la répartition pendant un virage de la valeur de freinage symétrique représentant une réserve de freinage, le procédé conforme à l'invention permet de maintenir un niveau de freinage global constant, lors de l'activation d'un freinage dissymétrique automatique de secours (fonction BSF). Ceci est le cas pour des ordres de commande directionnels inférieurs à un seuil prédéterminé. En effet, le procédé conforme à la présente invention ne couvre pas l'ensemble des amplitudes d'ordre du pilote, car cela induirait la mise en place d'une réserve de freinage trop importante qui produirait une surconsommation de carburant et un accroissement rapide de la température des freins.

Plus précisément, lorsque le pilote commande des ordres directionnels à l'aide de ses organes de pilotage, une partie de la réserve de freinage (calculée en fonction de l'ordre commandé) est relâchée d'un côté (de l'ensemble de freins) pour être ajoutée de l'autre côté. Pour de petits ordres du pilote, cette répartition permet de maintenir le même niveau global de freinage et facilite ainsi la tâche de maintien de la vitesse de l'aéronef. En effet, une fois que le pilote a compensé ce niveau de freinage global par application de poussée, la vitesse de l'aéronef reste constante, même en cas d'application de petits ordres directionnels par le pilote.

Le procédé conforme à la présente invention permet donc de ne pas impacter la vitesse de l'aéronef lorsqu'une fonction BSF est active.

La présente invention peut être mise en oeuvre sur tout type de freins (ou de moyens de freinage), et notamment sur des freins électriques, auxquels on applique lesdits ordres de freinage. Dans un mode de réalisation préféré, la présente invention est mise en oeuvre sur des freins usuels auxquels on applique des pressions. Dans ce cas, de façon avantageuse, on génère la valeur de freinage symétrique sous forme d'une valeur de pression (de freinage), dite pression symétrique, qui dépend de caractéristiques de l'aéronef. Avantageusement, cette pression symétrique est définie de sorte que la réserve de freinage dissymétrique associée couvre, pendant un virage établi, le moment résistif des trains d'atterrissage de l'aéronef, ainsi que des ordres du pilote inférieurs à un seuil prédéterminé pour ajuster la trajectoire.

Plus précisément, de façon avantageuse, cette pression symétrique est combinée avec une valeur de pression commandée, dite pression commandée, représentative desdits ordres de commande directionnels, pour former une pression haute et une pression basse, dont l'une est appliquée aux moyens de freinage du train d'atterrissage gauche et l'autre aux moyens de freinage du train d'atterrissage droit, en fonction de la direction relative auxdits ordres de commande directionnels.

De préférence, la pression haute Ph et la pression basse Pb sont calculées à partir de la pression symétrique Ps et de la pression commandée Pc (valeur de pression asymétrique), à l'aide des expressions suivantes :
- si Pc=0, Ph=Pb=Ps;
- si Pc<2*Ps, Ph=Ps+Pc/2 et Pb=Ps-Pc/2 ; et
- si Pc≥2*Ps, Ph=Pc et Pb=0.

En outre, de façon avantageuse, les conditions de mise en virage sont considérées comme remplies lorsque les conditions suivantes sont simultanément remplies :
- le freinage dissymétrique automatique de secours (fonction BSF) est activé ;
- la vitesse sol de l'aéronef est inférieure à une vitesse prédéterminée ; et
- un ordre de commande directionnel est supérieur à une valeur de seuil.

Par ailleurs, avantageusement, lorsque les conditions de mise en virage préalablement remplies, ne sont plus remplies, la valeur de freinage symétrique est encore maintenue pendant une durée prédéterminée, puis elle est annulée progressivement.

En outre, dans un mode de réalisation particulier, ladite valeur de freinage symétrique, représentant une réserve de freinage asymétrique, peut être combinée avec une réserve de poussée, et ladite réserve de poussée est appliquée à un mode de propulsion usuel, de préférence aux moteurs, de l'aéronef, lors d'une mise en virage dudit aéronef de manière à obtenir un effet analogue à celui de la répartition de la réserve de freinage, créant ainsi un doublement de la capacité de génération de mouvement de lacet de l'aéronef avec un impact bénéfique sur la température et la consommation de carburant.

La présente invention concerne également un dispositif de pilotage latéral d'un aéronef, en particulier d'un avion de transport, roulant au sol, ledit aéronef étant muni d'une roulette avant orientable pourvue d'un système d'orientation.

Selon l'invention, ledit dispositif du type comportant, au moins pour mettre en oeuvre un freinage dissymétrique automatique de secours en cas de panne du système d'orientation de la roulette avant :
- des moyens pour recevoir des ordres de commande relatifs à la commande de l'orientation de ladite roulette avant ;
- des moyens pour déterminer automatiquement, à partir desdits ordres de commande, des ordres de freinage pour un ensemble de freins de l'aéronef qui comprend des moyens de freinage d'au moins un train d'atterrissage principal gauche et des moyens de freinage d'au moins un train principal droit et qui est susceptible d'engendrer un mouvement latéral de l'aéronef autour d'un axe vertical par l'intermédiaire d'une action dissymétrique, lesdits ordres de freinage étant déterminés de manière à engendrer sur l'aéronef, lorsqu'ils sont appliqués à l'ensemble de freins, un mouvement latéral qui est sensiblement identique au mouvement latéral qu'aurait engendré l'application desdits ordres de commande à ladite roulette avant ; et
- des moyens pour appliquer automatiquement audit ensemble de freins lesdits ordres de freinage,
est remarquable en ce qu'il comporte, de plus :
- des moyens pour vérifier automatiquement, en cas d'activation du freinage dissymétrique automatique de secours, si des conditions de mise en virage de l'aéronef sont remplies ; et
- des moyens pour appliquer automatiquement, si ces conditions de mise en virage de l'aéronef sont remplies et au moins tant qu'elles le sont, une valeur de freinage, dite valeur de freinage symétrique, au niveau dudit ensemble de freins, puis pour répartir automatiquement au cours du virage cette valeur de freinage symétrique en freinage différentiel entre les moyens de freinage du train principal d'atterrissage gauche et les moyens de freinage du train principal d'atterrissage droit, en fonction d'ordres de commande directionnels courants, de manière à maintenir un niveau de freinage global constant, au moins pour des ordres de commande directionnels inférieurs à un seuil prédéterminé.

La présente invention concerne également un aéronef, en particulier un avion de transport, qui est muni d'un dispositif de pilotage latéral tel que celui précité.

Les figures du dessin annexé feront bien comprendre comment l'invention peut être réalisée. Sur ces figures, des références identiques désignent des éléments semblables.
La figure 1 est le schéma synoptique d'un dispositif qui illustre un mode de réalisation de l'invention.
Les figures 2 et 3 sont les schémas synoptiques de modes de réalisation préférés d'unités de calcul du dispositif de la figure 1.
Les figures 4A à 4D sont des graphiques qui illustrent respectivement différentes possibilités de répartition d'une réserve de freinage.

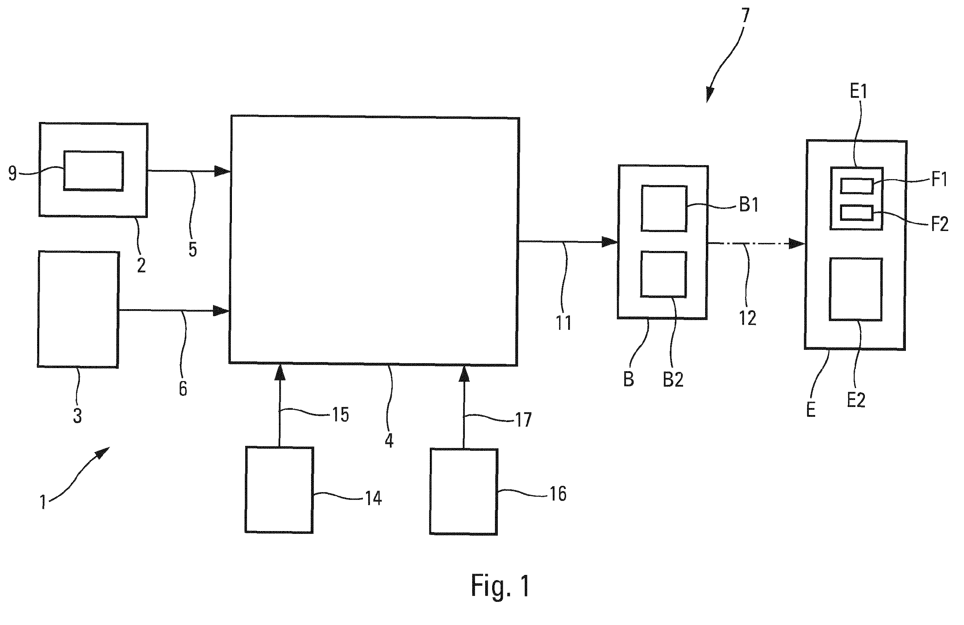

Le dispositif 1 conforme à l'invention et représenté schématiquement sur la figure 1 est destiné au pilotage latéral d'un aéronef, non représenté, qui roule au sol, en particulier sur un aéroport. Cet aéronef peut être en particulier un avion, civil ou militaire, de transport de passagers ou de marchandises (fret), ou un drone.

De façon usuelle, ledit dispositif 1 comporte, comme représenté sur la figure 1 :
- des moyens 2 usuels, pour engendrer des ordres de commande relatifs à la commande de l'orientation de la roulette avant (non représentée) de l'aéronef. Lesdits moyens 2 comportent des organes de pilotage 9, en particulier un volant, qui permettent à un pilote de l'aéronef d'engendrer de façon manuelle des ordres de commande relatifs à l'orientation de la roulette avant dudit aéronef ;
- un ensemble 3 de sources d'informations, qui comporte, notamment, des moyens pour mesurer de façon usuelle la vitesse sol courante de l'aéronef ;
- une unité de calcul 4 qui est reliée par l'intermédiaire de liaisons 5 et 6 respectivement auxdits moyens 2 et audit ensemble 3. Cette unité de calcul 4 est formée de manière à déterminer automatiquement, à partir desdits ordres de commande et de ladite vitesse sol courante, des ordres de freinage pour un ensemble de freins E1 de l'aéronef, faisant partie d'un ensemble de commande E. Cet ensemble de freins E1 comprend des moyens de freinage usuels F1 d'au moins un train d'atterrissage principal gauche et des moyens de freinage usuels F2 d'au moins un train d'atterrissage principal droit, et est susceptible d'engendrer un mouvement latéral de l'aéronef autour d'un axe vertical par l'intermédiaire d'un freinage différentiel ou dissymétrique (par rapport au plan longitudinal de symétrie de l'aéronef). En cas de panne du système d'orientation de la roulette avant, lesdits ordres de freinage sont déterminés par l'unité de calcul 4 de manière à engendrer sur l'aéronef (lorsqu'ils sont appliqués à l'ensemble de freins E1), un mouvement latéral qui est sensiblement identique au mouvement latéral qu'aurait engendrée (de façon usuelle) l'application desdits ordres de commande audit système d'orientation ; et
- des moyens 7 pour appliquer, automatiquement, lesdits ordres de freinage audit ensemble de freins E1, pour qu'ils engendrent une action dissymétrique sur l'aéronef afin d'obtenir un mouvement latéral de ce dernier. Lesdits moyens 7 comportent, en plus dudit ensemble de freins E1, un ensemble B1 de moyens d'actionnement dudit ensemble E1. Ledit ensemble B1 (qui fait partie d'un ensemble B) reçoit lesdits ordres de freinage de ladite unité de calcul 4 par l'intermédiaire d'une liaison 11 et les applique audit ensemble E, comme illustré par l'intermédiaire d'une liaison 12 en traits mixtes sur la figure 1.

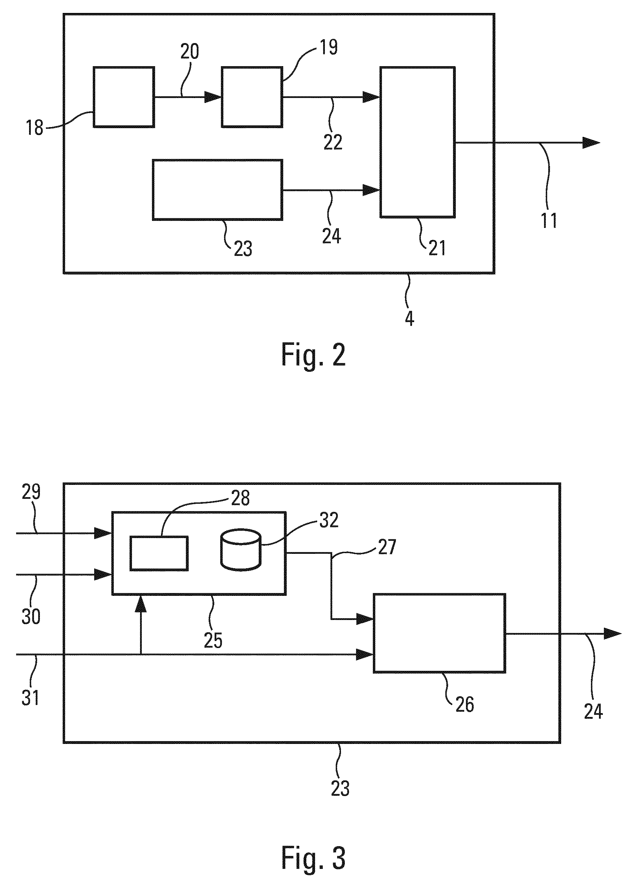

En outre, ladite unité de calcul 4 comporte, comme représenté sur la figure 2 :
- des moyens 18 pour calculer, de façon usuelle, un angle d'orientation de la roulette avant, qui est représentatif des ordres de commande (engendrés par lesdits moyens 2). Cet angle d'orientation est généralement celui qui est envoyé normalement à l'actionneur qui oriente la roulette avant, lorsque celui-ci fonctionne correctement ;
- des moyens 19 qui sont reliés par l'intermédiaire d'une liaison 20 auxdits moyens 18 et qui sont formée de manière à calculer, de façon usuelle, à partir au moins de l'angle d'orientation reçu des moyens 18 et de la vitesse sol courante mesurée, une pression commandée ; et
- des moyens 21 qui sont reliés par l'intermédiaire d'une liaison 22 auxdits moyens 19 et qui sont formés de manière à déterminer des ordres de pression (gauche et droite) qui doivent être appliqués respectivement aux freins agissant sur le côté gauche (c'est-à-dire aux moyens de freinage F1 du train d'atterrissage principal gauche) et aux freins agissant sur le côté droit de l'aéronef (c'est-à-dire aux moyens de freinage F2 du train d'atterrissage principal droit).

Le document FR - 2 929 019 divulgue une méthode possible pour calculer ladite pression commandée, à l'aide d'un calcul préalable de la courbure courante d'une trajectoire (de l'aéronef) telle qu'elle serait si ladite roulette avant était orientée suivant l'angle d'orientation. Les moyens 19 peuvent mettre en oeuvre cette dernière méthode ou bien une autre méthode usuelle pour déterminer la pression commandée.

Le dispositif 1 permet donc de contrôler l'aéronef au sol selon l'axe latéral en cas de perte du contrôle de la roulette avant, en appliquant un freinage différentiel (ou dissymétrique) afin de générer un moment de lacet, en réponse à une commande pilote sur les organes de contrôle usuels de la direction. Ce dispositif 1 comprend, à cet effet, les moyens précités qui mettent en oeuvre une fonction de secours BSF (« Back-Up Steering Function » en anglais) pour le contrôle directionnel, qui est tel que le comportement de l'aéronef soit le plus proche possible de celui obtenu en condition normale lorsque le système d'orientation de la roulette est disponible.

Le dispositif 1 comporte, de plus, comme représenté sur la figure 1 :
- des moyens 14 de commande d'un freinage, en l'occurrence des pédales de frein, qui sont reliées par l'intermédiaire d'une liaison 15 à l'unité de calcul 4 ; et
- des moyens 16 de commande de la poussée, en l'occurrence des manettes de poussée, qui sont reliés par l'intermédiaire d'une liaison 17 à l'unité de calcul 4.

Afin de minimiser le couplage latéral/longitudinal (à savoir minimiser les variations de vitesse de l'aéronef) lorsqu'un freinage dissymétrique (fonction BSF) est mis en oeuvre par le dispositif 1 pour contrôler le moment de lacet de l'aéronef en cas de panne du système d'orientation de la roulette avant, ledit dispositif 1 comporte, de plus, selon l'invention, une unité de calcul 23 qui est intégrée dans l'unité de calcul 4 et qui est reliée par une liaison 24 aux moyens 21 (figure 2).

Selon l'invention, ladite unité de calcul 23 comporte, comme représenté sur la figure 3 :
- des moyens 25 pour vérifier automatiquement, en cas d'activation du freinage dissymétrique automatique (fonction BSF), si des conditions de mise en virage de l'aéronef sont remplies, et pour transmettre une valeur de freinage, dite valeur de freinage symétrique, si ces conditions de mise en virage de l'aéronef sont remplies ; et
- des moyens 26 qui sont reliés par l'intermédiaire d'une liaison 27 auxdits moyens 25 et qui sont formés de manière à appliquer automatiquement, si les conditions de mise en virage de l'aéronef sont remplies et au moins tant qu'elles le sont, ladite valeur de freinage symétrique au niveau dudit ensemble de freins E1, puis au cours du virage à répartir automatiquement cette valeur de freinage symétrique en freinage différentiel entre les moyens de freinage F1 du train principal gauche et les moyens de freinage F2 du train principal droit. Cette répartition est réalisée, comme précisé ci-dessous, en fonction d'ordres de commande directionnels courants, de manière à maintenir un niveau de freinage global constant, au moins pour des ordres de commande directionnels inférieurs à un seuil prédéterminé.

Le dispositif 1 peut être mis en oeuvre sur tout type de freins (ou de moyens de freinage), et notamment sur des freins électriques, auxquels sont appliqués lesdits ordres de freinage. Dans un mode de réalisation préféré décrit ci-dessous, il est mis en oeuvre sur des freins usuels auxquels on applique des pressions.

Ainsi, l'unité de calcul 23 qui met en oeuvre une fonction dite BPO (pour « Brake Pressure Offset » en anglais) génère la valeur de freinage symétrique sous forme d'une valeur de pression, dite pression symétrique Ps. Cette pression symétrique Ps est combinée avec une valeur de pression commandée, dite pression commandée Pc, qui est représentative des ordres de commande directionnels, pour former une pression haute Ph et une pression basse Ps, dont l'une est destinée aux moyens de freinage F1 du train d'atterrissage gauche et dont l'autre est destinée aux moyens de freinage F2 du train d'atterrissage droit, en fonction de la direction relative auxdits ordres de commande directionnels.

La pression (de freinage) symétrique à appliquer est nulle si les conditions d'utilisation de la fonction BPO ne sont pas remplies.

Ainsi, par la répartition pendant un virage de la valeur de freinage symétrique (représentant une réserve de freinage), à l'aide de l'unité de calcul 23, le dispositif 1 conforme à l'invention permet de maintenir un niveau de freinage global constant, c'est-à-dire une vitesse constante de l'aéronef, lors de l'activation du freinage dissymétrique automatique (fonction BSF), et ceci au moins pour des ordres de commande directionnels inférieurs à un seuil prédéterminé.

Plus précisément, lorsque le pilote commande des ordres directionnels à l'aide de ses organes de pilotage 9, une partie de la réserve de freinage (calculée en fonction de l'ordre commandé) est relâchée d'un côté (de l'ensemble de freins) pour être ajoutée de l'autre côté. Pour de petits ordres du pilote, cette répartition permet de maintenir le même niveau global de freinage et ainsi de ne pas impacter la vitesse de l'aéronef.

L'application de cette réserve de freinage est quasi transparente pour le pilote, car celle-ci sera effective uniquement après la mise en virage, alors que le pilote sera déjà en train de compenser un pic de freinage différentiel par de la poussée. La répartition de la réserve de freinage permet ensuite, pendant le virage établi, de minimiser les variations de freinage global, associées à l'application de freinage différentiel. Cela permet de faciliter le pilotage et d'en améliorer le confort, tout en limitant les risques d'arrêt pendant le virage.

Lesdits moyens 25 comprennent une unité de vérification 28 pour vérifier automatiquement, en cas d'activation du freinage dissymétrique automatique (fonction BSF activée), si les conditions de mise en virage de l'aéronef sont remplies. Pour ce faire, cette unité de vérification 28 reçoit :
- par l'intermédiaire d'une liaison 29, l'état de la fonction BSF ;
- par l'intermédiaire d'une liaison 30, la vitesse sol de l'aéronef ; et
- par l'intermédiaire d'une liaison 31, une valeur représentative d'un ordre de commande directionnel. Cette valeur représentative de l'ordre de commande directionnel peut correspondre à la pression commandée issue de la fonction BSF ou à la position du volant, notamment.

Cette unité de vérification 28 comprend :
- un premier élément de comparaison pour comparer la vitesse sol de l'aéronef à une vitesse seuil prédéterminée ; et
- un second élément de comparaison pour comparer ladite valeur représentative d'un ordre de commande directionnel à une valeur de seuil prédéterminée.

En fonction notamment de ces comparaisons, l'unité de vérification 28 considère que les conditions de mise en virage sont remplies, lorsque les conditions suivantes sont simultanément remplies :
- le freinage dissymétrique automatique (fonction BSF) est activé ;
- la vitesse sol de l'aéronef est inférieure à ladite vitesse seuil prédéterminée ; et
- l'ordre de commande directionnel est supérieur à ladite valeur de seuil.

Ainsi, cette activation de la fonction BPO dépend du statut d'activation de la fonction BSF, de l'ordre directionnel pilote (afin de limiter l'activation de la fonction BPO à la manoeuvre de virage, l'aéronef n'étant pas considéré comme étant en virage si l'ordre directionnel pilote est inférieur à un certain seuil) et de la vitesse sol de l'aéronef (en ligne droite, à partir d'une certaine vitesse, la fonction BSF peut être amenée à commander un freinage différentiel afin de maintenir l'aéronef en ligne droite alors que dans cette phase le maintien de la fonction BPO n'est ni nécessaire ni souhaité).

Si toutes ces conditions sont réunies, la pression symétrique Ps qui est stockée dans une mémoire 32 est transmise par l'unité de vérification 28 aux moyens 26 par l'intermédiaire de la liaison 27. Ladite pression symétrique Ps dépend de caractéristiques de l'aéronef, et elle est déterminée à l'avance de sorte que la réserve de freinage dissymétrique associée (de valeur 2.Ps) couvre, pendant un virage établi, le moment résistif des trains d'atterrissage de l'aéronef, ainsi que des ordres du pilote pour ajuster la trajectoire.

En effet, si la pression symétrique Ps est trop faible, elle ne suffit pas à absorber les variations d'ordre du pilote en virage, et la fonction BPO mise en oeuvre par le dispositif 1 n'est pas suffisamment efficace. En outre, si la pression symétrique Ps est trop grande, l'impact longitudinal de la fonction BPO est trop important, le pilote doit appliquer une forte poussée, ce qui n'est pas désiré. La détermination d'une pression symétrique Ps optimale résulte donc d'un compromis entre ces deux contraintes.

De plus, cette pression symétrique Ps est appliquée avec une transition progressive, afin que l'activation du freinage symétrique reste transparente pour le pilote.

Généralement la montée en pression de la réserve de freinage est transparente, car elle intervient à l'attaque du virage où un niveau de freinage différentiel important est commandé pour générer le mouvement en lacet de l'aéronef. La réserve de freinage est alors entièrement consommée et le freinage n'est appliqué que sur le train interne au virage. Pendant l'attaque du virage, la montée en pression de la réserve n'a donc pas d'effet, et c'est uniquement quand le virage est établi et que le niveau de freinage différentiel requis pour maintenir l'aéronef en rotation est réduit, que la pression, au lieu de revenir à zéro ou à une faible valeur, redescend à la valeur de la réserve de freinage.

Par ailleurs, lorsque les conditions de mise en virage préalablement remplies, ne sont plus remplies, la valeur de pression symétrique est encore maintenue pendant une durée prédéterminée, puis elle est annulée progressivement et doucement. La transition lors de la désactivation de la fonction BPO est donc également progressive afin que le pilote ait le temps de réduire la poussée avant que le freinage ne soit complètement relâché.

En sortie de virage, cela laisse le temps au pilote de réduire la poussée avant que le freinage ne soit complètement relâché, et permet d'éviter de maintenir la fonction BSF lorsque l'aéronef est en ligne droite et ne nécessite pas de contrôle directionnel (ce qui permet de minimiser l'usure des freins et leur température, ainsi que le niveau de poussée nécessaire pour réaccélérer en sortie de virage).

Cette pression symétrique Ps fournie par l'unité de vérification 28 est combinée par les moyens 26 avec une valeur de pression commandée, dite pression commandée Pc. Cette pression commandée Pc est représentative des ordres de commande directionnels, est déterminée de façon usuelle, et est reçue par l'intermédiaire de la liaison 31. Les moyens 26 réalisent cette combinaison pour former une pression haute Ph et une pression basse Pb, dont l'une est destinée à être appliquée aux moyens de freinage F1 du train d'atterrissage gauche et dont l'autre est destinée à être appliquée aux moyens de freinage F2 du train d'atterrissage droit, en fonction de la direction relative auxdits ordres de commande directionnels. La pression haute Ph et la pression basse Pb, déterminées par les moyens 26, sont ensuite transmises par la liaison 24 aux moyens 21.

Ces moyens 26 permettent donc d'intégrer la valeur de freinage symétrique Ps au freinage différentiel commandé Pc et de définir deux pressions haute et basse, respectivement Ph et Pb.

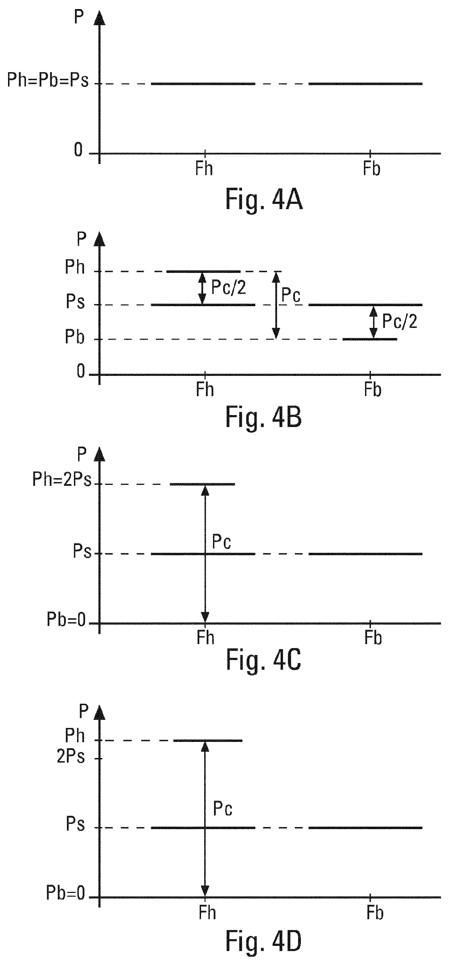

Les figures 4A à 4D illustrent sur un axe de pression P, les pressions Ph et Pb qui dépendent de Pc et Ps et qui sont destinées à des moyens de freinage Fh et Fb, dont l'un correspond à F1 et l'autre à F2 en fonction du sens du virage.

La logique mise en oeuvre par les moyens 26 est la suivante :
- si la pression symétrique Ps est non nulle et la pression commandée Pc est nulle, c'est-à-dire si la fonction BSF ne commande plus de freinage différentiel mais le freinage symétrique (fonction BPO) n'est pas encore relâché, alors Ph = Pb = Ps (figure 4A) ;
- si les deux pressions Ps et Pc sont non nulles et que Pc<2*Ps, c'est-à-dire si la pression commandée par BSF est inférieure à la somme des pressions symétriques disponibles des deux côtés, alors Ph = Ps + Pc/2 et Pb=Ps-Pc/2 (figure 4B). On utilise ainsi la valeur de freinage symétrique comme une réserve de freinage différentiel, de façon à maintenir un niveau de freinage global constant au niveau de l'aéronef, tout en générant du freinage différentiel. Ce mode de fonctionnement est valable si les pressions commandées sont petites (petits ordres pilote) ; et
- si les deux pressions Ps et Pc sont non nulles et que Pc≥2*Ps, c'est-à-dire si le freinage différentiel commandé par BSF est supérieur à la valeur de freinage symétrique, alors Ph = Pc et Pb=0. La figure 4C illustre la situation où Pc=2*Ps et la figure 4D illustre la situation où Pc>2*Ps.

Ainsi, dans le cas d'ordres directionnels du pilote importants, la réserve de freinage symétrique est totalement transformée en freinage dissymétrique, et un complément de freinage dissymétrique est appliqué selon le besoin. Dans ce cas, la fonction BPO permet de diminuer l'impact du freinage différentiel sur le freinage global de l'aéronef, même s'il ne l'annule pas complètement.

Les moyens 21 qui reçoivent ces valeurs Ph et Pb déterminent les pressions à transmettre à l'ensemble B1.

Le dispositif 1 permet donc de faciliter le pilotage, en cas de panne du système d'orientation de la roulette avant et d'activation d'une fonction BSF, en minimisant l'impact longitudinal (freinage) de la fonction BSF par l'application d'une valeur de freinage symétrique en amont du freinage différentiel commandé par la fonction pendant le virage.

Par ailleurs, dans un mode de réalisation particulier, ladite valeur de freinage symétrique, représentant une réserve de freinage asymétrique, est combinée avec une réserve de poussée. Dans ce mode de réalisation particulier, cette réserve de poussée est appliquée automatiquement aux moteurs de l'aéronef, c'est-à-dire à un ensemble de moteurs E2 faisant partie de l'ensemble E, par l'intermédiaire de moyens d'actionnement usuels B2 (faisant partie de l'ensemble B). Cette réserve de poussée est appliquée, lors d'une mise en virage de l'aéronef, par l'intermédiaire d'une répartition qui est analogue à la répartition de valeur de freinage symétrique (relative à la réserve de freinage) sur l'ensemble de freins. Ceci permet de créer un doublement de la capacité de génération de mouvement de lacet de l'aéronef avec un impact bénéfique sur la température et la consommation de carburant. On notera que ladite réserve de poussée peut être appliquée à tout mode usuel de propulsion de l'aéronef.

## Revendications

1. Procédé de pilotage latéral d'un aéronef roulant au sol, ledit aéronef étant muni d'une roulette avant orientable pourvu d'un système d'orientation, ledit procédé mettant en oeuvre, en cas de panne du système d'orientation de la roulette avant, un freinage dissymétrique automatique de secours, comprenant au moins des étapes consistant :
a) à recevoir des ordres de commande relatifs à la commande de l'orientation de ladite roulette avant ;
b) à partir desdits ordres de commande, à déterminer automatiquement des ordres de freinage pour un ensemble de freins (E1) de l'aéronef, qui comprend des moyens de freinage (F1) d'au moins un train d'atterrissage principal gauche et des moyens de freinage (F2) d'au moins un train d'atterrissage principal droit et qui est susceptible d'engendrer un mouvement latéral de l'aéronef autour d'un axe vertical par l'intermédiaire d'une action dissymétrique, lesdits ordres de freinage étant déterminés de manière à engendrer sur l'aéronef, lorsqu'ils sont appliqués à l'ensemble de freins (E1), un mouvement latéral qui est sensiblement identique au mouvement latéral qu'aurait engendré l'application desdits ordres de commande à ladite roulette avant ; et
c) à appliquer automatiquement audit ensemble de freins (E1) lesdits ordres de freinage,
**caractérisé en ce qu'**il comprend, de plus, des sous-étapes de l'étape b) consistant :
b2) à vérifier automatiquement, en cas d'activation du freinage dissymétrique automatique de secours, si des conditions de mise en virage de l'aéronef sont remplies ; et
b1) si ces conditions de mise en virage de l'aéronef sont remplies et au moins tant qu'elles le sont, à appliquer automatiquement une valeur de freinage, dite valeur de freinage symétrique, au niveau dudit ensemble de freins (E1), puis au cours du virage à répartir automatiquement cette valeur de freinage symétrique en freinage différentiel entre les moyens de freinage (F1) du train d'atterrissage principal gauche et les moyens de freinage (F2) du train d'atterrissage principal droit, en fonction d'ordres de commande directionnels courants, de manière à maintenir un niveau de freinage global constant, au moins pour des ordres de commande directionnels inférieurs à un seuil prédéterminé.

2. Procédé selon la revendication 1,
**caractérisé en ce que** l'on génère la valeur de freinage symétrique sous forme d'une valeur de pression, dite pression symétrique (Ps).

3. Procédé selon la revendication 2,
**caractérisé en ce que** ladite pression symétrique (Ps) dépend de caractéristiques de l'aéronef et est définie de sorte qu'une réserve de freinage dissymétrique associée couvre, pendant un virage établi, le moment résistif des trains d'atterrissage de l'aéronef, ainsi que des ordres du pilote inférieurs à un seuil prédéterminé pour ajuster la trajectoire.

4. Procédé selon l'une des revendications 2 et 3,
**caractérisé en ce que** ladite pression symétrique (Ps) est combinée avec une valeur de pression commandée, dite pression commandée (Pc), représentative desdits ordres de commande directionnels, pour former une pression haute (Ph) et une pression basse (Pb), dont l'une est appliquée aux moyens de freinage (F1) du train d'atterrissage gauche et l'autre aux moyens de freinage (F2) du train d'atterrissage droit, en fonction de la direction relative auxdits ordres de commande directionnels.

5. Procédé selon la revendication 4,
**caractérisé en ce que** la pression haute Ph et la pression basse Pb sont calculées à partir de la pression symétrique Ps et de la pression commandée Pc, à l'aide des expressions suivantes :
- si Pc=0, Ph=Pb=Ps
- si Pc<2*Ps, Ph=Ps+Pc/2 et Pb=Ps-Pc/2
- si Pc≥2*Ps, Ph=Pc et Pb=0.

6. Procédé selon l'une quelconque des revendications précédentes,
**caractérisé en ce que** les conditions de mise en virage sont considérées comme remplies lorsque les conditions suivantes sont simultanément remplies :
- le freinage dissymétrique automatique de secours est activé ;
- la vitesse sol de l'aéronef est inférieure à une vitesse prédéterminée ; et
- un ordre de commande directionnel est supérieur à une valeur de seuil.

7. Procédé selon l'une quelconque des revendications précédentes,
**caractérisé en ce que**, lorsque les conditions de mise en virage sont remplies, la valeur de freinage symétrique est appliquée progressivement.

8. Procédé selon l'une quelconque des revendications précédentes,
**caractérisé en ce que**, lorsque les conditions de mise en virage préalablement remplies, ne sont plus remplies, la valeur de freinage symétrique est encore maintenue pendant une durée prédéterminée, puis elle est annulée progressivement.

9. Procédé selon l'une quelconque des revendications précédentes,
**caractérisé en ce que** ladite valeur de freinage symétrique, représentant une réserve de freinage asymétrique, est combinée avec une réserve de poussée, et **en ce que** ladite réserve de poussée est appliquée à un mode de propulsion, en particulier à un ensemble de moteurs (E2), de l'aéronef, lors d'une mise en virage dudit aéronef.

10. Dispositif de pilotage latéral d'un aéronef roulant au sol, ledit aéronef étant muni d'une roulette avant orientable pourvue d'un système d'orientation, ledit dispositif (1) comportant, au moins pour mettre en oeuvre un freinage dissymétrique automatique de secours en cas de panne du système d'orientation de la roulette avant :
- des moyens (5) pour recevoir des ordres de commande relatifs à la commande de l'orientation de ladite roulette avant ;
- des moyens (4) pour déterminer automatiquement, à partir desdits ordres de commande, des ordres de freinage pour un ensemble de freins (E1) de l'aéronef qui comprend des moyens de freinage (F1) d'au moins un train d'atterrissage principal gauche et des moyens de freinage (F2) d'au moins un train d'atterrissage principal droit et qui est susceptible d'engendrer un mouvement latéral de l'aéronef autour d'un axe vertical par l'intermédiaire d'une action dissymétrique, lesdits ordres de freinage étant déterminés de manière à engendrer sur l'aéronef, lorsqu'ils sont appliqués à l'ensemble de freins (E1), un mouvement latéral qui est sensiblement identique au mouvement latéral qu'aurait engendré l'application desdits ordres de commande à ladite roulette avant ; et
- des moyens (7) pour appliquer automatiquement audit ensemble de freins (E1) lesdits ordres de freinage,
**caractérisé en ce qu'**il comporte, de plus :
- des moyens (25) pour vérifier automatiquement, en cas d'activation du freinage dissymétrique automatique de secours, si des conditions de mise en virage de l'aéronef sont remplies ; et
- des moyens (26) pour appliquer automatiquement, si ces conditions de mise en virage de l'aéronef sont remplies et au moins tant qu'elles le sont, une valeur de freinage, dite valeur de freinage symétrique, au niveau dudit ensemble de freins (E1), puis pour répartir automatiquement au cours du virage cette valeur de freinage symétrique en freinage différentiel entre les moyens de freinage (F1) du train d'atterrissage principal gauche et les moyens de freinage (F2) du train d'atterrissage principal droit, en fonction d'ordres de commande directionnels courants, de manière à maintenir un niveau de freinage global constant, au moins pour des ordres de commande directionnels inférieurs à un seuil prédéterminé.

11. Aéronef,
**caractérisé en ce qu'**il comporte un dispositif (1) tel que celui spécifié sous la revendication 10.

## Patentansprüche

1. Verfahren zur seitlichen Steuerung eines Flugzeugs, das auf dem Boden rollt, wobei das Flugzeug mit einem einstellbaren Vorderrad ausgestattet ist, das mit einem Einstellsystem versehen ist, wobei das Verfahren im Falle eines Ausfalls des Einstellsystems des Vorderrads eine asymmetrische, automatische Notfallbremsung ausführt, mit zumindest den folgenden Schritten:
a) Empfangen von Steuerungsbefehlen, die sich auf die Steuerung der Einstellung des Vorderrades beziehen;
b) ausgehend von den Steuerungsbefehlen automatisches Bestimmen der Bremsbefehle für eine Bremsanordnung (E1) des Flugzeugs, die Bremsmittel (F1) mindestens eines linken Hauptfahrwerks und Bremsmittel (F2) mindestens eines rechten Hauptfahrwerks umfasst und die fähig ist, eine seitliche Bewegung des Flugzeugs um eine vertikale Achse mittels einer asymmetrischen Einwirkung zu erzeugen, wobei die Bremsbefehle so bestimmt sind, um für das Flugzeug, während sie an die Bremsanordnung (E1) angelegt werden, eine seitliche Bewegung zu erzeugen, die im Wesentlichen identisch zu der seitlichen Bewegung ist, welche die Anwendung der Steuerungsbefehle an dem Vorderrad verursacht haben würde; und
c) automatisches Anwenden der Bremsbefehle an der Bremsanordnung (E1),
**dadurch gekennzeichnet, dass** es ferner Unterschritte des Schritts b) umfasst, die darin bestehen:
b2) automatisches Überprüfen im Fall der Aktivierung der asymmetrischen, automatischen Notfallbremsung, wenn die Bedingungen des Kurveneinsatzes des Flugzeugs erfüllt sind; und
b1), wenn die Bedingungen des Kurveneinsatzes des Flugzeugs erfüllt sind und zumindest solange sie es sind, automatisches Anwenden eines Bremswerts, der symmetrischer Bremswert genannt wird, bei der Bremsanordnung (E1), dann während der Kurve automatisches Verteilen dieses symmetrischen Bremswerts in ein differentielles Bremsens zwischen den Bremsmitteln (F1) des linken Hauptfahrwerks und den Bremsmitteln (F2) des rechten Hauptfahrwerks als Funktion der gegenwärtigen Richtungssteuerungsbefehle, um so ein konstantes, gesamtes Niveau des Bremsens zumindest für die Richtungssteuerungsbefehle, die niedriger als eine vorbestimmte Schwelle sind, zu halten.

2. Verfahren nach Anspruch 1, **dadurch gekennzeichnet, dass** der symmetrische Bremswert in Form eines Druckwerts erzeugt wird, der symmetrischer Druck (Ps) genannt wird.

3. Verfahren nach Anspruch 2, **dadurch gekennzeichnet, dass** der symmetrische Druck (Ps) von den Eigenschaften des Flugzeugs abhängig ist und so definiert ist, dass eine zugeordnete, unsymmetrische Bremsreserve während einer festgelegten Kurve das Widerstandsmoment des Fahrwerks des Flugzeugs sowie Befehle des Fahrers, die niedriger als ein vorbestimmter Schwellenwert sind, abdeckt, um die Bahn einzustellen.

4. Verfahren nach einem der Ansprüche 2 und 3, **dadurch gekennzeichnet, dass** der symmetrische Druck (Ps) mit einem gesteuerten Druckwert kombiniert wird, der gesteuerter Druck (Pc) genannt wird und der für die Richtungssteuerungsbefehle repräsentativ ist, um einen hohen Druck (Ph) und einen niedrigen Druck (Pb) zu bilden, wobei der eine an die Bremsmittel (F1) des linken Fahrwerks und der andere an die Bremsmittel (F2) des rechten Fahrwerks als Funktion von der Richtung mit Bezug auf die Richtungssteuerungsbefehle angelegt wird.

5. Verfahren nach Anspruch 4, **dadurch gekennzeichnet, dass** der hohe Druck Ph und der niedrige Druck Pb ausgehend von dem symmetrischen Druck Ps und dem gesteuerten Druck Pc mithilfe der folgenden Ausdrücke berechnet werden:
- wennPc=0,Ph=Pb=Ps
- wenn Pc<2*Ps,Ph=Ps+Pc/2 und Pb =Ps-Pc/2
- wenn Pc≥2*Ps, Ph=Pc und Pb=0.

6. Verfahren nach einem der vorhergehenden Ansprüche, **dadurch gekennzeichnet, dass** die Bedingungen des Kurveneinsatzes als erfüllt angesehen werden, wenn folgende Bedingungen gleichzeitig erfüllt sind:
- die automatische, asymmetrische Notfallbremsung ist aktiviert;
- die Bodengeschwindigkeit des Flugzeugs ist niedriger als eine vorbestimmte Geschwindigkeit; und
- ein Richtungssteuerungsbefehl ist größer als ein Schwellenwert.

7. Verfahren nach einem der vorhergehenden Ansprüche, **dadurch gekennzeichnet, dass**, während die Bedingungen des Kurveneinsatzes erfüllt sind, der symmetrische Bremswert nach und nach angewandt wird.

8. Verfahren nach einem der vorhergehenden Ansprüche, **dadurch gekennzeichnet, dass**, wenn die Bedingungen des Kurveneinsatzes, die zuvor erfüllt waren, nicht mehr erfüllt sind, der symmetrische Bremswert noch für eine vorbestimmte Zeit beibehalten wird, dann wird er nach und nach annulliert.

9. Verfahren nach einem der vorhergehenden Ansprüche, **dadurch gekennzeichnet, dass** der symmetrische Bremswert, der eine asymmetrische Bremsreserve darstellt, mit einer Schubkraftreserve kombiniert wird, und dass die Schubkraftreserve in einem Antriebsmodus des Flugzeugs, insbesondere auf eine Motoranrodung (E2), während eines Kurveneinsatzes des Flugzeugs angewandt wird.

10. Vorrichtung zur seitlichen Steuerung eines Flugzeugs, das auf dem Boden rollt, wobei das Flugzeug mit einem einstellbaren Vorderrad ausgestattet ist, das mit einem Einstellsystem versehen ist, wobei die Vorrichtung (1) umfasst, um zumindest im Falle eines Ausfalls des Einstellsystems des Vorderrads eine asymmetrische, automatische Notfallbremsung auszuführen:
- Mittel (5) zum Empfangen von Steuerungsbefehlen, die sich auf die Steuerung der Einstellung des Vorderrades beziehen;
- Mittel (4), um ausgehend von den Steuerungsbefehlen automatisch Bremsbefehle für eine Bremsanordnung (E1) des Flugzeugs zu bestimmen, die Bremsmittel (F1) mindestens eines linken Hauptfahrwerks und Bremsmittel (F2) mindestens eines rechten Hauptfahrwerks umfasst und die fähig ist, eine seitliche Bewegung des Flugzeugs um eine vertikale Achse mittels einer asymmetrischen Einwirkung zu erzeugen, wobei die Bremsbefehle so bestimmt sind, um für das Flugzeug, während sie an die Bremsanordnung (E1) angelegt werden, eine seitliche Bewegung zu erzeugen, die im Wesentlichen identisch zu der seitlichen Bewegung ist, welche die Anwendung der Steuerungsbefehle an dem Vorderrad verursacht haben würde; und
- Mittel (7) zum automatischen Anwenden der Bremsbefehle an der Bremsanordnung (E1),
**dadurch gekennzeichnet, dass** sie ferner umfasst:
- Mittel (25) zum automatischen Überprüfen im Fall der Aktivierung der asymmetrischen, automatischen Notfallbremsung, wenn die Bedingungen des Kurveneinsatzes des Flugzeugs erfüllt sind; und
- Mittel (26) zum automatischen Anwenden, wenn die Bedingungen des Kurveneinsatzes des Flugzeugs erfüllt sind und zumindest solange sie es sind, eines Bremswerts, der symmetrischer Bremswert genannt wird, bei der Bremsanordnung (E1), dann während der Kurve zum automatischen Verteilen dieses symmetrischen Bremswerts in ein differentielles Bremsens zwischen den Bremsmitteln (F1) des linken Hauptfahrwerks und den Bremsmitteln (F2) des rechten Hauptfahrwerks als Funktion der gegenwärtigen Richtungssteuerungsbefehle, um so ein konstantes, gesamtes Niveau des Bremsens zumindest für die Richtungssteuerungsbefehle, die niedriger als eine vorbestimmte Schwelle sind, zu halten.

11. Flugzeug, **dadurch gekennzeichnet, dass** es eine Vorrichtung (1) wie in Anspruch 10 angegeben umfasst.

## Claims

1. Method of lateral control of a taxiing aircraft, said aircraft being equipped with an orientable nose wheel provided with an orientation system, **characterized in that**, in the event of breakdown of the nose wheel orientation system, said method implements emergency automatic asymmetrical braking, comprising at least the steps of:
a) receiving command orders relating to the command of the orientation of said nose wheel;
b) on the basis of said command orders, automatically determining braking orders for a brake assembly (E1) of the aircraft, which comprises braking means (F1) for at least one left main landing gear and braking means (F2) for at least one right main landing gear and which is capable of generating a lateral movement of the aircraft about a vertical axis by means of an asymmetrical action, said braking orders being determined in such a way as to generate on the aircraft, when they are applied to the brake assembly (E1), a lateral movement which is substantially identical to the lateral movement which would have been generated by the application of said command orders to said nose wheel; and
c) automatically applying said braking orders to said brake assembly (E1),
**characterized in that** it also comprises sub-steps of the step b) consisting of:
b1) automatically verifying, in the event of activation of the emergency automatic asymmetrical braking, whether conditions for turning of the aircraft are met; and
b2) if these conditions for turning of the aircraft are met and so long as they are, automatically applying a braking value, known as a symmetrical braking value, at said brake assembly (E1), then in the course of the turn automatically distributing this symmetrical braking value in differential braking between the braking means (F1) of the left main landing gear and the braking means (F2) of the right main landing gear, as a function of current directional command orders, in such a way as to maintain a constant overall braking level, at least for directional command orders below a predetermined threshold.

2. Method according to Claim 1,
**characterized in that** the symmetrical braking value is generated in the form of a pressure value, known as a symmetrical pressure (Ps).

3. Method according to Claim 2,
**characterized in that** said symmetrical pressure (Ps) depends upon the characteristics of the aircraft and is defined such that an associated asymmetrical braking reserve covers, during an established turn, the resistive moment of the landing gears of the aircraft, as well as orders of the pilot below a predetermined threshold in order to adjust the trajectory.

4. Method according to one of Claims 2 and 3,
**characterized in that** said symmetrical pressure (Ps) is combined with a commanded pressure value, known as a commanded pressure (Pc), which is representative of said directional command orders, in order to form a high pressure (Ph) and a low pressure (Pb), of which one is applied to the braking means (F1) of the left landing gear and of which the other is applied to the braking means (F2) of the right landing gear, as a function of the direction relative to said directional command orders.

5. Method according to Claim 4,
**characterized in that** the high pressure Ph and the low pressure Pb are calculated on the basis of the symmetrical pressure Ps and of the commanded pressure Pc, with the aid of the following expressions:
- if Pc=0, Ph=Pb=Ps
- if Pc<2*Ps, Ph=Ps+Pc/2 and Pb=Ps-Pc/2
- if Pc>2*Ps, Ph=Pc and Pb=0.

6. Method according to any one of the preceding claims,
**characterized in that** the conditions of turning are considered as met when the following conditions are simultaneously met:
- the emergency automatic asymmetrical braking is activated;
- the ground speed of the aircraft is lower than a predetermined speed; and
- a directional command order is higher than a threshold value.

7. Method according to any one of the preceding claims,
**characterized in that**, when the turning conditions are met, the symmetrical braking value is applied progressively.

8. Method according to any one of the preceding claims,
**characterized in that**, when the previously met turning conditions are no longer met, the symmetrical braking value is still maintained for a predetermined duration, then it is progressively cancelled.

9. Method according to any one of the preceding claims,
**characterized in that** said symmetrical braking value, representing an asymmetrical braking reserve, is combined with a thrust reserve, and said thrust reserve is applied to a mode of propulsion, in particular to an assembly of engines (E2), of the aircraft, during turning of said aircraft.

10. Device for lateral control of a taxiing aircraft, said aircraft being equipped with an orientable nose wheel provided with an orientation system, **characterized in that** said device (1) includes, at least in order to implement emergency automatic asymmetrical braking in the event of breakdown of the nose wheel orientation system:
- means (5) for receiving command orders relating to the command of the orientation of said nose wheel;
- means (4) for automatically determining, on the basis of said command orders, braking orders for a brake assembly (E1) of the aircraft, which comprises braking means (F1) for at least one left main landing gear and braking means (F2) for at least one right main landing gear and which is capable of generating a lateral movement of the aircraft about a vertical axis by means of an asymmetrical action, said braking orders being determined in such a way as to generate on the aircraft, when they are applied to the brake assembly (E1), a lateral movement which is substantially identical to the lateral movement which would have been generated by the application of said command orders to said nose wheel; and
- means (7) for automatically applying said braking orders to said brake assembly (E1),
**characterized in that** it also includes:
- means (25) for automatically verifying, in the event of activation of the emergency automatic asymmetrical braking, whether conditions for turning of the aircraft are met; and
- means (26) for automatically applying, if these conditions for turning of the aircraft are met and so long as they are, a braking value, known as a symmetrical braking value, at said brake assembly (E1), then in the course of the turn automatically distributing this symmetrical braking value in differential braking between the braking means (F1) of the left main landing gear and the braking means (F2) of the right main landing gear, as a function of current directional command orders, in such a way as to maintain a constant overall braking level, at least for directional command orders below a predetermined threshold.

11. Aircraft,
**characterized in that** it includes a device (1) such as that specified in Claim 10.
